# EUROPÄISCHE PATENTSCHRIFT

(11) **EP 2 616 275 B1**
(45) Veröffentlichungstag und Bekanntmachung des Hinweises auf die Patenterteilung: **26.06.2019**
(21) Anmeldenummer: 11749414.6
(22) Anmeldetag: 30.08.2011
(51) Int. Cl.: B60Q 1/08, B60Q 1/14, B60Q 1/04

(54) **VORRICHTUNG UND VERFAHREN ZUR EINSTELLUNG DER BELEUCHTUNG EINES FAHRZEUGS BEI UNEINSICHTIGEN KURVEN**
DEVICE AND METHOD FOR ADJUSTING THE LIGHTING OF A VEHICLE IN BLIND CURVES
DISPOSITIF ET PROCÉDÉ DE RÉGLAGE DE L'ÉCLAIRAGE D'UN VÉHICULE DANS DES VIRAGES SANS VISIBILITÉ

(30) Priorität: 13.09.2010 DE 102010040650
(43) Veröffentlichungstag der Anmeldung: 24.07.2013
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2011/064886
(87) Internationale Veröffentlichungsnummer: WO 2012/034848

(56) Entgegenhaltungen:
- EP-A1- 1 115 010
- EP-A1- 1 591 754
- EP-A2- 1 914 115
- EP-A2- 2 085 280
- EP-A2- 2 100 769
- WO-A1-2006/111291
- DE-A1- 10 300 771
- US-B1- 6 709 141

## Beschreibung

### Stand der Technik

Die Erfindung geht aus von einer Vorrichtung oder Verfahren zur Einstellung der Beleuchtung eines Fahrzeugs bei uneinsichtigen Kurven nach Gattung der unabhängigen Ansprüche.

Aus der JP 2004098819 A ist ein Lichtsteuerungssystem bekannt, welches Straßenbedingungen erkennt und bei einen kurvenförmigen Straßenverlauf prüft ob die Frontlichter auf Fernlicht geschaltet sind, um diese in diesem Fall auf Abblendlicht einzustellen.

Aus der US 2002080617 A ist ein System zur Lichtsteuerung und Blendungsüberwachung bekannt, wobei die Beleuchtung abhängig von der Gegend in der sich ein Fahrzeug befindet und abhängig vom Straßenverlauf angepasst wird. Abhängig von der Wahrscheinlichkeit mit der sich das Fahrzeug in einer bestimmten Gegend bzw. vor einem bestimmten Straßenverlauf befindet, wird die Beleuchtung eingestellt.

Die Offenlegungsschrift EP 2 100 769 A2 zeigt eine Fahrzeuglampe und ein Verfahren zum Steuern der Fahrzeuglampe.

Die Offenlegungsschrift WO 2 006 111 291 A1 zeigt eine Scheinwerferanlage für ein Fahrzeug.

Die Offenlegungsschrift DE 10 300 771 A1 zeigt ein Kraftfahrzeug mit wenigstens einem Scheinwerfer mit wenigstens einer Lampe zum Erzeugen eines vom Scheinwerfer abgestrahlten Lichtkegels und einem Mittel zum Erfassen des Annäherns an eine Fahrbahnkreuzung oder Fahrbahneinmündung, wobei der abgestrahlte Lichtkegel des Scheinwerfers durch eine Steuerung beim erfassten Annähern an die Fahrbahnkreuzung oder Fahrbahneinmündung derart veränderbar ist, dass zumindest ein Teil des Kreuzungs- oder Einmündungsbereichs weiträumig ausgeleuchtet wird.

Die allgemein bekannt Problematik der Fahrzeugbeleuchtung liegt darin, dass einerseits der Fahrer des eigenen Fahrzeugs eine möglichst gute Ausleuchtung aus Komfort und Sicherheitsgründen erreichen möchte, andererseits dadurch aber nicht andere Verkehrsteilnehmer geblendet werden sollen. Bekannt sind Systeme zur automatischen Lichtsteuerung, die Scheinwerfer eines entgegen kommenden Fahrzeugs erkennen. Eine solche Erkennung schlägt allerdings fehl, wenn im voraus liegenden Straßenverlauf eine Kurve zu erwarten ist oder befindet und ein entgegen kommendes Fahrzeug plötzlich auftaucht, so dass das blendende Licht (z.B. Fernlicht) nicht schnell genug angepasst oder deaktiviert werden kann.

In der Lehre der erstgenannten Schrift wird versucht, das Problem dadurch zu lösen, dass vor jeder Kurve generell das Fernlicht deaktiviert wird, unabhängig davon ob ein Fahrzeug entgegen kommt oder nicht.

### Offenbarung der Erfindung

Die erfindungsgemäße Vorrichtung bzw. Verfahren mit den Merkmalen des unabhängigen Anspruchs hat demgegenüber den Vorteil, eine Anpassung der Einstellung der Beleuchtung nicht pauschal beim Vorhandensein einer voraus liegenden Kurve stattfindet, sondern konkreter in Abhängigkeit von der Einsichtigkeit der Kurve, bzw. in der Kurve, vorgenommen wird und somit spezieller auf die Verkehrssituation eingegangen werden kann.
Insbesondere kann ein Fahrer, oder auch ein automatisches System zur Blendungsvermeidung entgegenkommender Fahrzeuge in der Kurve, nicht schnell genug reagieren die Beleuchtung einzustellen um eine Blendung zu vermeiden, wenn z.B. ein Fahrzeug in einer uneinsichtigen Kurve plötzlich "um die Ecke" kommt. Daher ist solch eine präventive Einstellung nur in dieser Situation sinnvoll, während in Situationen in denen die Kurve einsichtig ist, eine solche Einstellung nicht sinnvoll wäre.
Weiterhin vorteilhaft kann sein, dass die anderen Verkehrsteilnehmer nicht visuell (z.B. mittels einer kostspieligen Kamera) oder anderer Sensorik erkannt werden müssen und somit ein vereinfachtes kostengünstiges System dargestellt werden kann, welches möglicherweise nicht die komplette Funktionalität einer automatischen Fernlichtsteuerung beinhaltet, jedoch den Fahrer in bestimmten, eher schwierigen Situationen (wie hier: Uneinsehbarkeit der Kurve) unterstützt.

Zur Durchführung des Verfahrens müssen folgende Schritte ausgeführt werden: Eine voraus liegende Kurve muss erkannt werden und weiterhin muss deren Einsichtigkeit festgestellt werden.
Falls eine Kurve voraus liegt, bestimmt das Maß der Einsichtigkeit dann, ob eine Einstellung der Beleuchtung vorgenommen wird, bzw. in welchem Maße.

Durch die in den abhängigen Ansprüchen aufgeführten Maßnahmen sind vorteilhafte Weiterbildungen und Verbesserungen des im unabhängigen Anspruch angegebenen Verfahrens möglich.
Vorteilhafterweise ist eine Einstellung/Anpassung der möglicherweise blendenden Ausleuchtung nur dann vorzunehmen, wenn vor einer Kurve tatsächlich nicht beurteilt werden kann, ob ein Fahrzeug entgegenkommt, was der Fall ist, wenn die Kurve nicht einsichtig ist. Andersherum, wenn die Kurve einsichtig ist und mit vorhandenen Systemen ein möglicherweise entgegen kommender Verkehrsteilnehmer rechtzeitig erkannt werden kann, muss keine Maßnahme im Rahmen einer Blendungsvermeidung durchgeführt werden. Vielmehr kann in diesem Fall optional die Ausleuchtung (automatisch) erhöht werden, ggf. ohne Aktivierung durch den Fahrer, um ihn bei der Kurvendurchfahrt zu unterstützen. Das Risiko der größeren Blendwahrscheinlichkeit bei besserer Ausleuchtung kann in Kauf genommen werden, da die Kurve als einsichtig angesehen wird und der Fahrer, ebenso wie ein automatisches System, die Möglichkeit hat, rechtzeitig durch Einstellung der Beleuchtung die mögliche Blendung zu reduzieren oder vermeiden.
Die Einstellung kann hierbei durch kontinuierliche Änderung von Beleuchtungsparametern (z.B. Leuchtstärke, Leuchtrichtung, Leuchtwinkel) vorgenommen werden, oder in (wenigstens 2) Stufen (z.B. Fernlicht-Abblendlicht).

Erfindungsgemäß werden Daten übermitteln, die Aufschluss über die Einsichtigkeit einer Kurve geben. Zum Beispiel können zu voraus liegenden Streckenabschnitten (hier: Kurven) Daten aus einer Datenbank abgefragt werden, beispielsweise aus einer Datenbank eines Navigationssystems, deren zugrunde liegende Karten Kurveninformationen zur Verfügung stellen.
Neben den Daten aus einer Datenbank (z.B. dem bordeigenen Navigationssystem) können alternativ oder zusätzlich weitere Datenbanken, beispielsweise online bereitgehaltene (z.B. Internet) verwendet werden, die zusätzlich zu den Kurveninformationen Zusatzdaten z.B. zur Bebauung oder zur Landschaft) zur Verfügung stellen. Manche moderne Navigationsgeräte bringen bereits die Möglichkeit mit auf externe Datenbanken (z.B. aus dem Internet) zuzugreifen.
Als weitere denkbare Datenquelle ist auch ein fahrzeuggebundenes oder bordeigenes System geeignet, welches anhand von früheren Vorbeifahrten an der selben Stelle durch die selbe voraus liegende Kurve Daten gewonnen hat, die nun verwendet werden können. Ein solches Verfahren ist in der DE 10 2008 041679 A1 beschrieben, welche hier per Referenz eingebunden wird. Bei diesem kommt eine Videokamera zum Einsatz, die den voraus liegenden Raum durch den sich das eigene Fahrzeug bewegen wird erfasst. Das videobasierte System erkennt Gegenstände, wie z.B. Gebäude, und weiß daher um ihre Existenz. Eine Einsichtigkeit einer Kurve kann abgeleitet werden, da die Sichtlinien durch die Aufnahme während der früheren Vorbeifahrt bestimmt werden konnten.
Durch ein bordeigenes System kann eine Unabhängigkeit von externen Datenbanken erreicht werden, welche möglicherweise fehlerhaft oder unvollständig sind. Auch kann natürlich eine Datenfusion stattfinden und die Daten aus den Datenbanken und den bordeigenen Systemen miteinander verknüpft werden.
Es kann positionsabhängig auch wechselweise auf Daten aus der Datenbank oder auf die des bordeigenen Systems zurückgegriffen werden, z.B. die Daten der Videokamera können dann verwendet werden, wenn diese auswertbare Daten liefert, oder einen Bereich erfasst, der als ausreichend einsichtig gilt. Ist dies nicht der Fall, kann auf andere Datenquellen umgeschaltet werden. Alternativ kann auch eine Datenfusion und Plausibilisierung stattfinden.

Vorteilhafterweise können die Daten aus Bildern von Satellitenbildern, Luftbildern oder Straßenbildern bestehen, auf denen die Einsichtigkeit einer Kurve mittels Bildanalyseverfahren abgeleitet werden kann. Beispielsweise kann von einer eingeschränkten Einsichtigkeit ausgegangen werden, wenn das Satellitenbild einen dichten Wald um die Kurve erkennt. Oder es können anhand von Straßenbildern, die im Kurvenbereich aufgenommen wurden, die Einsichtigkeit bestimmt werden.
Diese Informationen können durch bildauswertende/bildgebende Verfahren aus Satelliten-, Luft- oder Straßenbildern ermittelt werden, in dem z.B. anhand der Lage der Kurve geprüft wird, was sich an der Innenkurve befindet, wo sich die notwendige Sichtlinie befindet. Ist dort entsprechender Bewuchs, Gebäude oder Berge zu erkennen, so kann auf die (mangelnde) Einsichtigkeit geschlossen werden. Gegebenenfalls können anhand geometrischer Überlegungen die Sichtlinien auch exakt bestimmt werden, so dass die Lichteinstellung abhängig davon nur an den entsprechenden Stellen zum Einsatz kommt, wo die Sichtlinien nicht derart vorliegen, um einen entgegenkommenden Verkehrsteilnehmer so rechtzeitig zu erkennen, so dass das blendende Licht seitens des Fahrers oder seitens eines automatischen Systems rechtzeitig reduziert oder deaktiviert werden kann.

Vorteilhafterweise kann aus verschiedenen Daten ein Maß für die Einsichtigkeit gewonnen werden. Neben direkten Angaben zur Einsichtigkeit einer Kurve sei es als diskreter Wert (z.B. Einsichtig ja/nein) oder als ein kontinuierliches Maß für die Einsichtigkeit (z.B. die Vorausschauweite in der Kurve), können auch Daten vorliegen, die indirekten Aufschluss über die Einsichtigkeit geben. Moderne Navigationsgeräte, bzw. deren zugrunde liegende Karten, stellen oftmals zusätzliche Daten von Bebauungen oder Landschaften zur Verfügung aus denen beispielsweise mittels einer Heuristik abgeschätzt werden kann, ob bzw. wie gut einsichtig eine voraus liegende Kurve ist.
Hierzu zählen Angaben über die Topographie, wenn sich z.B. Berge neben der Straße in der Innenkurve befinden, wie es auf einer Bergstraße der Fall sein kann und die Einsichtigkeit damit nicht oder nur eingeschränkt gegeben ist. Informationen über Bebauung kann ebenso dienlich sein, so ist beispielsweise üblicherweise die Position jedes Hauses bzw. jeder Hausnummer in einer Straße bekannt und sofern sich dies nahe an einer Kurve (insbesondere an scharfen Einmündungen) befindet, kann dort von einer eingeschränkten Einsichtigkeit ausgegangen werden. Informationen über die Landschaft können ebenso von Bedeutung sein, so ist beispielsweise in einem bewaldeten Gebiet (abhängig von der Dichte des Waldes sofern diese Information vorliegt) von einer eingeschränkten Einsichtigkeit in Kurven auszugehen. Auch weiterer Bewuchs kann Indikator für die Einsichtigkeit sein, beispielsweise Hecken an Grundstücken, insbesondere wenn sie nahe an der Straße gewachsen sind.

Vorteilhafterweise kann sich das Verfahren darauf beschränken, die Einstellung nur dann durchzuführen, wenn das Fahrzeug an der Innenseite einer Kurve entlang fährt, d.h. auf der inneren Spur. Abhängig davon ob Links- oder Rechtsverkehr gegeben ist, kann die innen liegende Kurve eine Links- oder eine Rechtskurve sein. Ein entgegen kommender Verkehrsteilnehmer würde sich vollständig durch den Lichtkegel des eigenen Fahrzeugs bewegen.
Da der Lichtkegel beim Durchfahren auf der Außenspur üblicherweise nicht, bzw. nicht so sehr die innere Spur der Kurve ausleuchtet, insbesondere wenn kein adaptives Kurvenlicht zum Einsatz kommt, würde ein entgegen kommendes Fahrzeug in diesem Fall eher unwahrscheinlich geblendet werden, so dass eine eingreifende Einstellung nicht notwendig ist.
Anstatt beim Durchfahren einer Außenkurve die Einstellung vollständig auszulassen, kann auch eine reduzierte Einstellung stattfinden, wodurch das Licht nur etwas weniger blendend eingestellt wird, als bei vollständiger Einstellung, bei der nach Möglichkeit gar nicht mehr geblendet werden sollte. Dies kann einen möglichen guten Kompromiss darstellen zwischen optimaler Ausleuchtung und der Wahrscheinlichkeit einer Blendung von Gegenverkehr unter Berücksichtigung der Blendwirkung, die überhaupt möglich ist.

Vorteilhafterweise können anhand von anderen Merkmalen auch Feststellungen getroffen werden, ob ein Verkehrsteilnehmer entgegen kommt. So können intelligente Lichtsteuerungssysteme heutzutage nur entgegen kommende Scheinwerfer direkt erkennen, es ist jedoch denkbar, mittels bildauswertender Verfahren die Reflexionen von Scheinwerferlichtern, wie sie üblicherweise bei einem in der Kurve entgegen kommenden Fahrzeug vor dessen Erscheinen auftreten, zu erkennen. Sofern dies rechtzeitig vor der Blendung geschieht, kann die erfindungsgemäße Einstellung auch unterbleiben. Ob es den bordeigenen Systemen möglich ist, solche Wirkungen wahrzunehmen, kann beispielsweise auch wieder aus Datenbanken ermittelt werden, die beispielsweise auch wieder Aufschluss darüber geben, ob ein Lichtkegel reflektieren würde, so dass ihn das bordeigene System wahrnehmen könnte. Dieses Prinzip kann auch mittels anderer physikalische Sekundärwirkungen durchgeführt werden, die aufgrund des Vorhandenseins eines anderen Verkehrsteilnehmers wie gezeigt (dessen Beleuchtung) vorhanden sind.

Vorteilhafterweise kann, wenn eine uneinsichtige Kurve erkannt wurde, auf verschiedene Arten mit der Einstellung verfahren werden. Die vermutlich einfachste Möglichkeit ist das Fernlicht zu deaktivieren, sofern aktiviert und auf ein Standardlicht (Abblendlicht, etc.) umzuschalten. Weiterhin ist denkbar die Leuchtrichtung zu verändern oder Leuchtverteilung zu beeinflussen.

Vorteilhafterweise kann die Leuchtverteilung derart eingestellt werden, dass die Fahrspur bzw. Fahrbahn des möglicherweise entgegen kommenden Verkehrsteilnehmers nicht so ausgeleuchtet wird, dass an dieser Stelle eine Blendung stattfindet. Die Standardausleuchtung würde dahingehend adaptiert werden, dass vor allem die eigene Fahrspur ausgeleuchtet wird, nicht jedoch die Gegenspur, bzw. der Ort, an dem sich der Verkehrsteilnehmer befindet. Es muss sich hierbei nicht um eine Straßenspur handeln, sondern kann auch Gehwege oder Fahrradwege betreffen, auf der mögliche Verkehrsteilnehmer sich befinden. Auch gilt Gleiches für andere vor Blendung zu schützende Objekte.

Vorteilhafterweise wird definiert an welchem Punkt dieses Verfahren zum Einsatz kommt. Die Trasse eines Verkehrsweges (insbesondere in einer Straße) wird üblicherweise durch verschiedene (mathematisch definierte) Teilstücke zusammengesetzt, wobei neben Geraden und Kreisbögen auch Übergangsbögen wie Klothoiden oder andere Formen verwendet werden. Die Frage nach dem geeigneten Zeitpunkt (viel mehr Ort) zur Aktivierung bzw. Deaktivierung der erfindungsgemäßen Einstellung kann anhand der speziellen Punkte dieser mathematisch definierbaren Teilstücke bestimmt werden. Hierbei fallen insbesondere der Scheitelpunkt einer Kurve bzw. des Kurvenstücks ins Auge, welches den Punkt der maximalen Krümmung bezeichnet. Weiterhin kann auch die Mitte einer Kurve, dass heißt die Hälfte der Strecke innerhalb einer Kurve als Ausgangspunkt herangezogen werden, ebenso Knotenpunkte, das sind die Punkte die die einzelnen mathematischen definierten Teilstücke miteinander verbinden, insbesondere z.B. ein Kurvenanfang oder -ende. Abhängig von diesem Bezugspunkt kann in einem konfigurierbaren Abstand von diesem (dieser kann größer, gleich oder kleiner 0 sein), die Aktivierung bzw. in einem zweiten Punkt (beispielsweise dem Kurvenende) die Deaktivierung der erfindungsgemäßen Einstellung veranlasst werden.

Vorteilhafterweise kann der konfigurierbare Abstand für die Aktivierung bzw. Deaktivierung der erfindungsgemäßen Einstellung vom Bezugspunkt abhängig von einigen Parametern adaptiv bzw. variabel gewählt werden. Beispielsweise kann bei einem größeren Kurvenradius der konfigurierbare Abstand derart gewählt werden, dass die Einstellung erst näher an der Kurve bzw. sogar in der Kurve aktiviert wird, im Vergleich zu einem kleinen Kurvenradius. Dies kann deshalb Sinn machen, da eine Kurve mit größerem Radius einsichtiger ist und der Moment in dem ein entgegen kommender Verkehrsteilnehmer auftaucht nicht so plötzlich ist, wie bei einer Kurve mit kleinem Radius. Die Geschwindigkeit des eigenen Fahrzeugs kann auch ein Einflussparameter sein, der den konfigurierbaren Abstand bestimmt, so kann bei hoher Geschwindigkeit der Punkt der Ausführung der Einstellung nahe an bzw. in die Kurve verschoben werden, da erstens die Umgebung bei hoher Geschwindigkeit quasi statisch wirken kann und die Zeitdauer für ein Auftauchen eines anderen Verkehrsteilnehmers geringer ist und somit die Wahrscheinlichkeit dafür, dass einer überhaupt auftaucht. Zweitens bedingt die höhere Geschwindigkeit ein höheres Sicherheitserfordernis für das eigene Fahrzeug, was verstärkt für eine gute Ausleuchtung spricht. Der Abstand der Sichtbehinderung von der Kurve hat Einfluss darauf, wie frühzeitig die Einstellung aktiviert werden sollte. Ist die Sichtbehinderung einen gewissen Abstand von der Kurve entfernt, so kann die Einstellung später durchgeführt werden, als wenn die Kurve sehr uneinsichtig ist. Gleiches gilt für die Aufhebung der Einstellung, d.h. die Wiederherstellung der früheren Beleuchtung (z.B. des Fernlichtes), wenn gegen Ende der Kurve davon ausgegangen werden kann, dass die Einsichtigkeit der weiterhin voraus liegenden Strecke (wieder) gewährleistet ist.

Vorteilhafterweise wird die erfindungsgemäße Einstellung wieder deaktiviert, bzw. deren Einfluss aufgehoben, oder reduziert, wenn sie nicht mehr benötigt wird. Dies ist insbesondere dann der Fall, wenn die Sichtbehinderung nicht mehr vorliegt, beispielsweise wenn die Bewegung des Fahrzeugs derart fortgeschritten ist, dass wieder eine Sichtlinie auf die Bereiche des möglichen entgegen kommenden Verkehrs vorhanden ist. Alternativ kann auch, wenn z.B. die Sichtbehinderung oder die Sichtlinie nicht bestimmbar ist, die Einstellung pauschal immer dann aufgehoben werden, wenn das Ende der Kurve erreicht ist, bzw. nach dem diese durchfahren wurde. Dann findet wieder eine Ausleuchtung statt, wie sie optimal für den Fahrer des eigenen Fahrzeugs ist, bzw. wie sie vorher eingestellt war. Der ausleuchtungsreduzierende Eingriff der erfindungsgemäßen Einstellung wird somit nur so lang wie notwendig aufrecht erhalten. Unter gewissen Einflussparametern kann, wie bereits erwähnt, die Einstellung abhängig von weiteren Parametern früher oder später als an einem Bezugspunkt aufgehoben werden.

Vorteilhafterweise ist die erfindungsgemäße Einstellung, die als (Teil einer) Regelung/Steuerung ausgeführt sein kann, nur ein Teil einer übergeordneten Reglerstruktur zur Lichtsteuerung, welche beispielsweise Aufgaben aus dem bekannten Stand der Technik erfüllt. Insbesondere soll die erfindungsgemäße Einstellung nicht dann aktiviert, bzw. deaktiviert werden, wenn höher priorisierte Gründe für eine andersartige Gestaltung der Ausleuchtung vorliegen. Wenn beispielsweise definitiv entgegen kommender Verkehr erkannt wird, sollte eine Blendung vermieden werden und nicht beispielsweise nach der Kurve trotzdem die erfindungsgemäße Einstellung derart deaktiviert werden, dass beispielsweise Fernlicht aktiviert wird und der erkannte Gegenverkehr geblendet werden würde. Zwar könnte die erfindungsgemäße Einstellung systemimmanent in diesem Fall trotzdem deaktiviert werden, eine übergeordnete Regelung muss dann jedoch derart höherprior in das System eingreifen, so dass ein Aufblenden vermieden wird.

### Begriffserläuterungen

Die Erfindung bezieht sich nicht nur auf Fahrzeuge sondern Verkehrsteilnehmer im Allgemeinen, insbesondere falls es sich um diejenigen handelt die durch die Scheinwerfer eines eigenen Fahrzeugs geblendet werden würden. Dies kann neben Autos, LKWs auch Fahrradfahrer und Fußgänger umfassen, denkbar ist auch eine Erweiterung auf statische Objekte die nicht aktiv am Verkehrsgeschehen teilnehmen, wo eine Blendung dennoch unerwünscht ist, z.B. bei Gebäuden. Unter einem entgegen kommenden Verkehrsteilnehmer ist vorliegend ebenso ein möglicherweise entgegen kommender Verkehrsteilnehmer gemeint, bzw. insbesondere ein solcher, da es sich üblicherweise um eine präventive Maßnahme handelt und die tatsächliche Existenz eines Verkehrsteilnehmers (noch) nicht bekannt ist. Weiterhin sind auch Verkehrsteilnehmer mit eingeschlossen, die nicht entgegen kommen, sondern überhaupt geblendet werden.

Unter der Leuchtverteilung einer Scheinwerfercharakteristik versteht man die Art und Weise wie im Endeffekt das vom Scheinwerfer ausgesandte Licht auf die Umgebung verteilt wird. Hierbei kann es verschiedene Leuchtrichtungen oder Hauptleuchtrichtungen geben und die Intensität in diese verschiedenen Richtungen unterschiedlich sein. So ist klassischerweise bei einem Kurvenfahrtlicht denkbar, dass in Richtung der eigenen Fahrspur die Lichtverteilung so bestimmt wird, dass eine weitere Ausleuchtung (d.h. in die Ferne) erfolgt, als der Lichtanteil der auf die Gegenfahrbahn gesendet wird, der die Nähe ausleuchtet. Dieser Lichtanteil der auf die Gegenfahrbahn gesendet wird, jedoch nicht so weit in die Ferne reicht, kann dafür wiederum weiter in die Kurve gelenkt werden so dass der Ausleuchtwinkel dort größer wird. Es sind verschiedene Ausleuchtungen durch die entsprechende Wahl einer Leuchtverteilung und Leuchtrichtung denkbar die bekanntesten sind Fernlicht, Abblendlicht, Stadtlicht, Autobahnlicht und Kurvenlicht.

Die Begriffe des Blendens bzw. Nichtblendens sind nicht zwingend diskret aufzufassen, der Blendeffekt nimmt jedoch mit zunehmender Lichtstärke zu, kann umgekehrt jedoch auch nicht ganz vermieden werden, ohne das Licht abzuschalten. Unter einer Blendungsvermeidung kann vorliegend eben auch eine Blendungsverringerung gemeint sein. Eine höhere Ausleuchtung geht üblicherweise mit einer höheren Blendungsgefahr einher, daher sind diese beiden Faktoren i.d.R. konkurrierend. Einerseits soll eine möglichst gute Ausleuchtung erreicht werden, andererseits eine Blendung vermieden werden.

Der voraus liegende bzw. zu durchfahrende Streckenabschnitt ist derjenige Abschnitt, der vor dem Fahrzeug liegt und aller Ansicht nach durchfahren werden wird. Dieser kann beispielsweise durch eine bereits beschriebene Videokamera aufgenommen und erkannt werden, genauso wie durch Daten aus einem Navigationssystem. Die Aufnahme konnte dabei durch eine Kamera im eigenen, oder auch in einem anderen Fahrzeug erstellt worden sein.

Bildbezogene Daten können einerseits die Bilder aus einer bordeigenen Kamera beinhalten, die während der aktuellen Fahrt aufgenommen werden. Weiterhin Daten, die in einer früheren Fahrt des selben Fahrzeugs aufgenommen wurden. Andererseits können solche Daten aus zweiten Quellen stammen, die mittels einer Kamera eines Satelliten (Satellitenbild), Flugzeug (Luftbild) oder eines anderen bodenbehafteten Geräts (Fahrzeug) (Straßenbild) erzeugt wurden. Straßenbilder können einzelne auf der Erde aufgenommene Bilder sein, die einen Bezug zur Straßenszenerie haben, insbesondere der Sicht von der Straße aus. Weiterhin sind auch Panoramabilder umfasst, die mittels geeigneter Datenaufbereitung eine virtuelle Durchfahrt durch das Gebiet ermöglichen. Mittels solcher Bilder kann virtuell prädiktiv sozusagen um die Kurve geschaut werden, womit die statischen Gegebenheiten der Szenerie bekannt werden würden.

Als Sichtlinie bzw. Sichtachse werden Geraden beschrieben, die eine freie Sicht zwischen zwei Punkten ermöglichen. Besonders von Bedeutung für die Beurteilung der Einsichtigkeit sind die Grenzsichtlinien, das sind diejenigen, die gleichzeitig eine Tangente an einem Sichthindernis bilden. Eine Grenzsichtlinie kann beispielsweise dadurch bestimmt werden, dass das eine Ende auf dem einzusehenden Bereich nach der Kurve sich befindet und andererseits ein Sichthindernis (z.B. ein Gebäude in der Innenkurve) von dieser tangiert wird. Dort wo nun diese Gerade geschnitten mit der zukünftigen Fahrtrajektorie des eigenen Fahrzeugs einen Schnittpunkt bildet, ist die Sicht wieder uneingeschränkt frei auf den voraus liegenden Streckenabschnitt. Dies wäre dann beispielsweise gleichzeitig der Punkt, an dem wieder normal ausgeleuchtet werden kann und die erfindungsgemäße Einstellung wieder deaktiviert werden kann.

Die Einsichtigkeit eines Streckenabschnitts (bzw. einer Kurve) bietet ein Maß für die Wahrscheinlichkeit eines plötzlichen Auftauchens eines Verkehrsteilnehmers und somit einer Blendungswahrscheinlichkeit.
Weiterhin sind die geometrischen Gegebenheiten in Betracht zu ziehen, da eine gute Einsichtigkeit auch den Bereich der Kurve umfassen kann, der von der eigenen Beleuchtung (noch) gar nicht ausgeleuchtet wird und somit ein rechtzeitiges echt präventives Reagieren und Einstellung der Beleuchtung erlaubt. Die Einsichtigkeit kann bestimmt werden, wenn eine Grenzsichtlinie existiert die einen zu definierenden genügend großen Teil der Kurve oder eines Bereichs vor der Kurve umfasst, so dass fahrpsychologisch ausgedrückt: Das Geschehen in der Kurve so weit im Voraus beobachtet werden kann, dass der Fahrer bzw. ein Fahrerassistenzsystem rechtzeitig Maßnahmen (bzw. Gegenmaßnahmen) ergreifen kann, bevor ein anderer Verkehrsteilnehmer geblendet wird. Ein mögliches analoges Maß für die Einsichtigkeit wäre der Winkel der Grenzsichtlinie bezogen auf die Fahrtrichtung oder Ausleuchtrichtung. Als einsichtig kann ein Streckenabschnitt bezeichnet werden, wenn ein bestimmter Grenzwinkel überschritten wird, als nichteinsichtig, wenn dieser unterschritten wird. Alternativ kann in das Maß der Einsichtigkeit noch einfließen, welche Strecke im voraus einsichtig ist. Ggf. kann dies auch von der Geschwindigkeit abhängen, üblicherweise muss die Vorausschauweite bei höherer Geschwindigkeit größer sein, um rechtzeitig reagieren zu können. Da die Geschwindigkeit des eigenen und anderer Fahrzeuge nicht immer bekannt ist, können auch Geschwindigkeitsbeschränkungen (Wert kann z.B. aus einer Datenbank (Navigationsgerät) ermittelt werden) als Maximalwert einer möglichen zu erwartenden Geschwindigkeit angenommen werden.

Vorausschauweite bezeichnet in ähnlicher Weise die Entfernung, in der ein Bereich/Szenerie einsichtig ist. Diese ist in der Regel durch physikalische Gegebenheiten limitiert (z.B. Erdkrümmung, Wetterbedingungen (Nebel), Begrenzungen der Sichtlinie), oder durch technische (z.B. Eigenschaften der Kamera).

### Beschreibung der Figuren

Ausführungsbeispiele sind in den Zeichnungen dargestellt und in der nachfolgenden Beschreibung näher erläutert.

Es zeigen:
Figur 1 die Problemstellung einer Blendung eines entgegen kommenden Fahrzeugs in einer Kurve
Figur 2 die Ortspunkte und Wirkung der Einstellung der Beleuchtung
Figur 3 die Adaption des Verfahrens auf die Ausleuchtung der eigenen Spur.

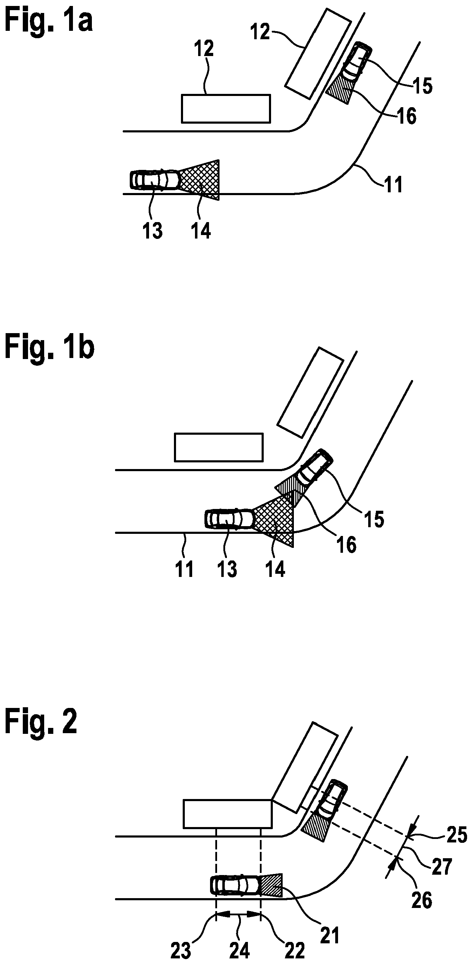

In Figur 1a ist eine Szenerie einer Straße 11 dargestellt, in der sich ein eigenes Fahrzeug 13, das einen Lichtkegel 14 mit Fernlicht aussendet und aufgrund der sichtbehindernden Gebäude 12 noch nicht sehen kann, dass ein anderes Fahrzeug 15 mit einem (im dargestellten Fall) abgeblendeten Lichtkegel 16 entgegen kommt. Bewegen sich die Fahrzeuge aufeinander zu, so wird zu einem späteren Zeitpunkt, wie im Figurteil 1b gezeigt, der Lichtkegel des Fernlichts des eigenen Fahrzeugs 14 das Fahrzeug bzw. den Fahrer des Fahrzeugs 15 blenden.

In Figur 2 wird beschrieben, wie das Verfahren die Problemstellung aus der Figur 1 behebt. Hierbei wird an einem Ortspunkt 23 das Fernlicht des eigenen Fahrzeugs bereits deaktiviert, wobei sich dieser Punkt 23 in einem konfigurierbaren Abstand 24 vor dem Scheitelpunkt bzw. Anfangspunkt der Kurve 22 befindet. Im Punkt 23 wird das Fernlicht auf Abblendlicht 21 umgeschaltet. Bereits vor dem Ende der Kurve 25 kann in einem konfigurierbaren Abstand 27 (der nicht zwangsläufig dem konfigurierbaren Abstand 24 entsprechen muss) in einem Punkt 26 vor der Kurve das Fernlicht wieder aktiviert werden bzw. die Einstellung wieder aufgehoben werden.

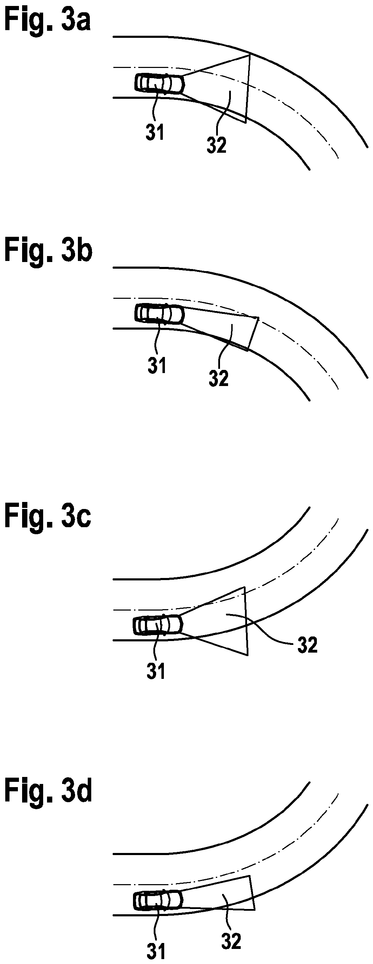

In Figur 3 Teil a) und b) ist eine Rechtskurve dargestellt, wobei im Figurteil a) das Verfahren nicht angewandt wird und das eigene Fahrzeug 31 den Lichtkegel 32 nicht nur über die eigene Fahrspur 33 sondern auch über die Gegenspur ausstrahlt. Im Figurteil 3b) ist der Lichtkegel entsprechend so angepasst, dass nur die eigene Fahrspur (im Wesentlichen) ausgeleuchtet wird. Im Figurteil 3c und 3d ist dasselbe für eine Linkskurve bzw. Außenkurve dargestellt.

## Patentansprüche

1. Verfahren zur Einstellung einer Beleuchtung (14), insbesondere von Scheinwerfern, für ein Fahrzeug (13)
- mit einem ersten Schritt,
- in dem eine voraus liegend befindliche Kurve (11) erkannt wird,
- deren Einsichtigkeit mittels übermittelter Daten, die Aufschluss über die Einsichtigkeit der Kurve geben, ermittelt wird,
- wobei die Einsichtigkeit die Möglichkeit einer Blendung, von nicht rechtzeitig erkannten Verkehrsteilnehmern, insbesondere von Gegenverkehr (15), repräsentiert und
- einem zweiten Schritt,
- der präventiven Einstellung der Beleuchtung zwischen einer möglichst geringen Blendung und einer möglichst guten Ausleuchtung,
**dadurch gekennzeichnet, dass**
- die Einstellung abhängig von der Einsichtigkeit vorgenommen wird, wobei abhängig von der Einsichtigkeit wenigstens zweistufig oder kontinuierlich ausleuchtungserhöhende oder blendungsreduzierende Einstellungen derart vorgenommen werden, dass
- im Falle der Einsichtigkeit eine ausleuchtungserhöhende Einstellung vorgenommen wird und/oder
- im Falle mangelnder Einsichtigkeit eine blendungsreduzierende Einstellung vorgenommen wird, **dadurch gekennzeichnet, dass**
im ersten Schritt erkannt wird, ob die Kurve an der Außen- oder Innenseite durchfahren wird,
- und im zweiten Schritt die blendungsreduzierende Einstellung nur dann vorgenommen wird, wenn es sich um das Durchfahren der Innenseite handelt,
- oder die blendungsreduzierende Einstellung nicht in dem Maße reduziert wird, wenn eine Außenkurve durchfahren wird, wie es beim Durchfahren der Innenkurve der Fall gewesen wäre, wobei
im ersten Schritt ein Scheitel- oder Knotenpunkt (22, 26) der Kurve bestimmt wird und
- im zweiten Schritt die Einstellung im Scheitel- oder Knotenpunkt der Kurve oder in einem konfigurierbaren Abstand (24, 27) entfernt vom Scheitel- oder Knotenpunkt durchgeführt wird, wobei der konfigurierbare Abstand abhängig vom Kurvenradius und/oder der Geschwindigkeit des eigenen Fahrzeugs und/oder dem Abstand der Sichtbehinderung von der Kurve gewählt wird.

2. Verfahren nach Anspruch 1, **dadurch gekennzeichnet, dass**
- die Einsichtigkeit ermittelt wird, anhand von Daten einer Datenbank, insbesondere eines Navigationssystems,
- oder anhand von Daten, die durch ein fahrzeuggebundenes System in früheren Vorbeifahrten an der selben Stelle gewonnen wurden.

3. Verfahren nach Anspruch 2, **dadurch gekennzeichnet, dass**
- die Daten Satelliten-, Luft- oder Straßenbilder beinhalten oder aus solchen generiert wurden.

4. Verfahren nach Anspruch 2 oder 3, **dadurch gekennzeichnet, dass**
- die Einsichtigkeit durch Interpretation von Daten gewonnen wird, insbesondere aus Daten über die Topografie, Bebauung, Landschaft, Bewuchs, Unfälle (12).

5. Verfahren nach einem der vorigen Ansprüche, **dadurch gekennzeichnet, dass**
- im ersten Schritt auch festgestellt wird, ob ein Verkehrsteilnehmer vorhanden ist, anhand von physikalischen Wirkungen, die dieser erzielt, ohne direkt sichtbar zu sein, wobei die physikalischen Wirkungen Reflexionen von Scheinwerferlichtern sind, wie sie üblicherweise bei einem in der Kurve entgegen kommenden Fahrzeug vor dessen Erscheinen auftreten.

6. Verfahren nach einem der vorigen Ansprüche, **dadurch gekennzeichnet, dass**
- die Einstellung ein Deaktivieren des Fernlichts (14) oder ein Aktivieren des Abblendlichts (21) oder ein Verändern der Leuchtrichtung oder Verändern der Leuchtverteilung (32) umfasst.

7. Verfahren nach Anspruch 6, **dadurch gekennzeichnet, dass**
- die Leuchtverteilung (32) so eingestellt wird, dass der möglicherweise auftauchende Verkehrsteilnehmer oder dessen Fahrspur oder Fahrbahn weniger ausgeleuchtet wird.

8. Verfahren nach einem der vorigen Ansprüche, **dadurch gekennzeichnet, dass**
- in einem dritten Schritt der Einfluss der Einstellung aufgehoben wird,
- wenn die Einsichtigkeit wieder gegeben ist
- und/oder die Kurve durchfahren wurde.

9. Verfahren nach einem der vorigen Ansprüche, **dadurch gekennzeichnet, dass**
- die Einstellung Teil einer übergeordnete Regelstrukturen zur Lichtsteuerung ist.

10. Vorrichtung zur Einstellung einer Beleuchtung (14), insbesondere von Scheinwerfern, für ein Fahrzeug (13)
- mit einer Einheit zum
- Erkennen einer voraus liegend zu befahrenden Kurve (11) und
- Ermitteln von deren Einsichtigkeit, mittels übermittelter Daten, die Aufschluss über die Einsichtigkeit der Kurve geben,
- wobei die Einsichtigkeit die Möglichkeit einer Blendung, von nicht rechtzeitig erkannten Verkehrsteilnehmern, insbesondere von Gegenverkehr (15), repräsentiert und
- einer Einstellungseinheit, die derart ausgebildet ist, dass,
- die präventive Einstellung der Beleuchtung zwischen einer möglichst geringen Blendung und einer möglichst guten Ausleuchtung stattfindet,
**dadurch gekennzeichnet, dass**
- die Einstellung abhängig von der Einsichtigkeit vorgenommen wird, wobei abhängig von der Einsichtigkeit wenigstens zweistufig oder kontinuierlich ausleuchtungserhöhende oder blendungsreduzierende Einstellungen derart vorgenommen werden, dass
- im Falle der Einsichtigkeit eine ausleuchtungserhöhende Einstellung vorgenommen wird und/oder
- im Falle mangelnder Einsichtigkeit eine blendungsreduzierende Einstellung vorgenommen wird, **dadurch gekennzeichnet, dass**
im ersten Schritt erkannt wird, ob die Kurve an der Außen- oder Innenseite durchfahren wird,
- und im zweiten Schritt die blendungsreduzierende Einstellung nur dann vorgenommen wird, wenn es sich um das Durchfahren der Innenseite handelt,
- oder die blendungsreduzierende Einstellung nicht in dem Maße reduziert wird, wenn eine Außenkurve durchfahren wird, wie es beim Durchfahren der Innenkurve der Fall gewesen wäre, wobei
im ersten Schritt ein Scheitel- oder Knotenpunkt (22, 26) der Kurve bestimmt wird und
- im zweiten Schritt die Einstellung im Scheitel- oder Knotenpunkt der Kurve oder in einem konfigurierbaren Abstand (24, 27) entfernt vom Scheitel- oder Knotenpunkt durchgeführt wird, wobei der konfigurierbare Abstand abhängig vom Kurvenradius und/oder der Geschwindigkeit des eigenen Fahrzeugs und/oder dem Abstand der Sichtbehinderung von der Kurve gewählt wird.

## Claims

1. Method for setting an illumination (14), in particular of headlights, for a vehicle (13)
- having a first step,
- in which a bend (11) that is situated ahead is detected,
- the degree of visibility thereof is ascertained by means of transmitted data that offer information relating to the degree of visibility of the bend,
- wherein the degree of visibility represents the possibility of glare for road users which are not detected in time, in particular for oncoming traffic (15), and
- a second step
- of preventively setting the illumination between the lowest possible glare and the best possible lighting, **characterized in that**
- the setting is performed in dependence on the degree of visibility, wherein, in dependence on the degree of visibility, settings are performed which increase lighting or reduce glare at least in two stages or continuously, such that
- in the case of good visibility, setting which increases lighting is performed, and/or
- in the case of poor visibility, a glare-reducing setting is performed, **characterized in that** in the first step, detection as to whether the vehicle travels the bend along the outside or inside is performed,
- and, in the second step, the glare-reducing setting is performed only if travel proceeds along the inside,
- or the glare-reducing setting in the case of travel along an outside bend is not reduced to the same extent as if travel proceeded along the inside bend, wherein, in the first step, an apex or node point (22, 26) of the bend is determined, and,
- in the second step, the setting is performed in the apex or node point of the bend or at a configurable distance (24, 27) from the apex or node point, wherein the configurable distance is selected in dependence on the radius of the bend and/or on the speed of the vehicle in question and/or on the distance of the visibility impairment from the bend.

2. Method according to Claim 1, **characterized in that**
- the degree of visibility is ascertained on the basis of data of a database, in particular a navigation system,
- or on the basis of data obtained by an on-board system during earlier journeys passing the same location.

3. Method according to Claim 2, **characterized in that**
- the data contain satellite images, aerial views or road images, or were generated therefrom.

4. Method according to Claim 2 or 3, **characterized in that**
- the degree of visibility is obtained by interpreting data, in particular data relating to the topography, building density, landscape, vegetation, accidents (12).

5. Method according to one of the preceding claims, **characterized in that**
- an ascertainment as to whether a road user is present is also made in the first step on the basis of physical effects that said road user causes without being directly visible, wherein the physical effects are reflections of headlights, as typically occur in the case of a vehicle that is approaching in the bend before it appears.

6. Method according to one of the preceding claims, **characterized in that**
- setting comprises deactivating the high beam (14) or activating the dipped beam (21) or changing the lighting direction or changing the lighting distribution (32) .

7. Method according to Claim 6, **characterized in that**
- the lighting distribution (32) is set such that the potentially appearing road user or their lane is lit to a lesser extent.

8. Method according to one of the preceding claims, **characterized in that**,
- in a third step, the influence of the setting is cancelled
- when good visibility returns
- and/or the bend has been passed.

9. Method according to one of the preceding claims, **characterized in that**
- the setting is part of a superordinate regulating structure for light control.

10. Apparatus for setting an illumination (14), in particular of headlights, for a vehicle (13)
- having a unit for
- detecting a bend (11) ahead that is to be passed, and
- ascertaining the degree of visibility thereof by means of transmitted data that offer information relating to the degree of visibility of the bend,
- wherein the degree of visibility represents the possibility of glare for road users which are not detected in time, in particular for oncoming traffic (15), and
- a setting unit, which is set up for
- preventively setting the illumination between the lowest possible glare and the best possible lighting, **characterized in that**
- the setting is performed in dependence on the degree of visibility, wherein, in dependence on the degree of visibility, settings are performed which increase lighting or reduce glare at least in two stages or continuously, such that
- in the case of good visibility, setting which increases lighting is performed, and/or
- in the case of poor visibility, a glare-reducing setting is performed, **characterized in that** in the first step, detection as to whether the vehicle travels the bend along the outside or inside is performed,
- and, in the second step, the glare-reducing setting is performed only if travel proceeds along the inside,
- or the glare-reducing setting in the case of travel along an outside bend is not reduced to the same extent as if travel proceeded along the inside bend, wherein, in the first step, an apex or node point (22, 26) of the bend is determined, and,
- in the second step, the setting is performed in the apex or node point of the bend or at a configurable distance (24, 27) from the apex or node point, wherein the configurable distance is selected in dependence on the radius of the bend and/or on the speed of the vehicle in question and/or on the distance of the visibility impairment from the bend.

## Revendications

1. Procédé de réglage d'un éclairage (14), notamment de phares, pour un véhicule (13),
- comprenant une première étape,
- dans laquelle un virage (11) qui se trouve à l'avant est reconnu,
- dont la discernabilité est déterminée au moyen de données communiquées qui fournissent des renseignements à propos de la discernabilité du virage,
- la discernabilité représentant la possibilité d'un éblouissement d'usagers de la route non reconnus en temps voulu, notamment du trafic en sens inverse (15), et
- une deuxième étape,
- de réglage préventif de l'éclairage entre un éblouissement le plus faible possible et une meilleure illumination possible,
**caractérisé en ce que**
- le réglage est effectué en fonction de la discernabilité, des réglages d'augmentation de l'illumination ou de réduction de l'éblouissement étant effectués en au moins deux niveaux ou en continu en fonction de la discernabilité de telle sorte que
- dans le cas de la discernabilité, un réglage d'augmentation de l'illumination est effectué et/ou
- dans le cas d'un manque de discernabilité, un réglage de réduction de l'éblouissement est effectué, **caractérisé en ce que**
la première étape comprend la reconnaissance du fait que le virage sera franchi au niveau du côté extérieur ou intérieur,
- et dans la deuxième étape, le réglage de réduction de l'éblouissement n'est effectué que s'il s'agit du franchissement du côté intérieur,
- ou le réglage de réduction de l'éblouissement, lorsqu'un virage extérieur est franchi, n'est pas effectué de la même amplitude que celle qui serait appliquée dans le cas du franchissement du virage intérieur,
un sommet ou un point nodal (22, 26) du virage étant déterminé dans la première étape et
- dans la deuxième étape, le réglage dans le sommet ou le point nodal du virage ou à une distance (24, 27) pouvant être configurée du sommet ou du point nodal est effectué, la distance pouvant être configurée étant choisie en dépendance du rayon du virage et/ou de la vitesse du véhicule propre et/ou de la distance de l'obstruction de la visibilité.

2. Procédé selon la revendication 1, **caractérisé en ce que**
- la discernabilité est déterminée à l'aide de données d'une base de données, notamment d'un système de navigation,
- ou à l'aide de données qui ont été acquises par un système lié au véhicule lors d'un passage précédent au même endroit.

3. Procédé selon la revendication 2, **caractérisé en ce que** les données contiennent des photos par satellite, aériennes ou routières ou ont été générées à partir de telles photos.

4. Procédé selon la revendication 2 ou 3, **caractérisé en ce que** la discernabilité est obtenue par l'interprétation de données, notamment à partir de données relatives à la topographie, aux constructions, au paysage, à a végétation, aux accidents (12).

5. Procédé selon l'une des revendications précédentes, **caractérisé en ce que** dans la première étape, une constatation a également lieu de la présence ou non d'un usager de la route à l'aide d'effets physiques que celui-ci obtient sans être directement visible, les effets physiques étant des réflexions de lumières de phares qui, dans le cas d'un véhicule qui arrive en sens inverse dans le virage, se produisent généralement avant que celui-ci apparaisse.

6. Procédé selon l'une des revendications précédentes, **caractérisé en ce que** le réglage comprend une désactivation du feu de route (14) ou une activation du feu de croisement (21) ou une modification de la direction d'éclairage ou une modification de la distribution d'éclairage (32).

7. Procédé selon la revendication 6, **caractérisé en ce que** la distribution d'éclairage (32) est réglée de telle sorte que l'usager de la route qui apparaît éventuellement ou sa voie de circulation ou sa chaussée est moins éclairé.

8. Procédé selon l'une des revendications précédentes, **caractérisé en ce que**
- dans une troisième étape, l'influence du réglage est supprimée,
- lorsque la discernabilité est de nouveau acquise
- et/ou le virage a été franchi.

9. Procédé selon l'une des revendications précédentes, **caractérisé en ce que** le réglage fait partie d'une structure de régulation de niveau supérieur servant à commander l'éclairage.

10. Dispositif de réglage d'un éclairage (14), notamment de phares, pour un véhicule (13),
- comprenant une unité servant à
- reconnaître un virage (11) à franchir qui se trouve à l'avant,
- déterminer sa discernabilité au moyen de données communiquées qui fournissent des renseignements à propos de la discernabilité du virage,
- la discernabilité représentant la possibilité d'un éblouissement d'usagers de la route non reconnus en temps voulu, notamment du trafic en sens inverse (15), et
- une unité de réglage, qui est configurée de telle sorte que
- le réglage préventif de l'éclairage entre un éblouissement le plus faible possible et une meilleure illumination possible a lieu,
**caractérisé en ce que**
- le réglage est effectué en fonction de la discernabilité, des réglages d'augmentation de l'illumination ou de réduction de l'éblouissement étant effectués en au moins deux niveaux ou en continu en fonction de la discernabilité de telle sorte que
- dans le cas de la discernabilité, un réglage d'augmentation de l'illumination est effectué et/ou
- dans le cas d'un manque de discernabilité, un réglage de réduction de l'éblouissement est effectué, **caractérisé en ce que**
la première étape comprend la reconnaissance du fait que le virage sera franchi au niveau du côté extérieur ou intérieur,
- et dans la deuxième étape, le réglage de réduction de l'éblouissement n'est effectué que s'il s'agit du franchissement du côté intérieur,
- ou le réglage de réduction de l'éblouissement, lorsqu'un virage extérieur est franchi, n'est pas effectué de la même amplitude que celle qui serait appliquée dans le cas du franchissement du virage intérieur,
un sommet ou un point nodal (22, 26) du virage étant déterminé dans la première étape et
- dans la deuxième étape, le réglage dans le sommet ou le point nodal du virage ou à une distance (24, 27) pouvant être configurée du sommet ou du point nodal est effectué, la distance pouvant être configurée étant choisie en dépendance du rayon du virage et/ou de la vitesse du véhicule propre et/ou de la distance de l'obstruction de la visibilité.
